# NEW EUROPEAN PATENT SPECIFICATION

(11) **EP 0 435 569 B2**
(45) Date of publication and mention of the opposition decision: **04.12.2002**
(45) Mention of the grant of the patent: 13.03.1996
(21) Application number: 90313978.0
(22) Date of filing: 20.12.1990
(51) Int. Cl.: H02G 15/184

(54) **Radially shrinkable sleeve for enclosing a connection or a terminal of an electrical cable**
Radial schrumpfbare Muffe zum Einschliessen einer Verbindung oder eines Anschlusses eines elektrischen Kabels
Manchon radialement rétractable pour entourer une jonction ou une terminaison d'un câble électrique

(30) Priority: 29.12.1989 DE 3943296
(43) Date of publication of application: 03.07.1991
(73) Proprietor: MINNESOTA MINING AND MANUFACTURING COMPANY, St. Paul, Minnesota 55144 (US)
(72) Inventor: Friedrich, Jürgen D., W-4040 Neuss 1 (DE); Krabs, Raymond, W-4040 Neuss 1 (DE); Viebranz, Manfred, W-4040 Neuss 1 (DE)
(74) Representative: Graalfs, Edo, Dipl.-Ing.

(56) References cited:
- EP-A- 0 035 271
- EP-A- 0 226 393
- DE-A- 3 001 158
- DE-A- 3 027 097
- DE-C- 1 465 493
- GB-A- 2 036 460
- GB-A- 2 042 818
- US-A- 3 515 798

## Description

### Background of the Invention

### 1. Field of the Invention

The invention refers to a radially shrinkable sleeve for enclosing a connection or a terminal, respectively, of an electrical cable, particularly of a medium voltage cable.

### 2. Description of the Prior Art

When making cable splices or cable end terminations, it is necessary to expose the conductor of the cable or the cable core. Therefore, specific problems are to be met when cable connections or cable terminations are to be made in view of the insulation and the shielding. Undesired concentrations of the electrical field may cause electrical discharges and eventually breakdowns if no field restraining or field controlling means are used. By using a suitable enclosure in the area of the connection or the terminal, care must be taken that electrophysical conditions are arranged similar to those prevailing in the course of the remaining cable.

Radially shrinkable sleeves for enclosing a connection or termination of an electrical cable are known in various designs. The EPO application 0 272 131 discloses a sleeve arrangement wherein first a heat shrinkable sleeve of dielectric material is shrunk onto the connection area with the ends engaging the exposed field restraining layer of the cable ends. A conductive paint is coated onto the outer side of the shrinkable hose in the area of the connector element interconnecting the conductors. In a second step, a double layer heat shrinkable sleeve of insulating material is shrunk onto the first sleeve, the length of the inner layer being somewhat larger than that of the outer layer so that a conical gradation is achieved for a geometrical capacitive field control. The placement of the sleeve arrangement in two steps is relatively time consuming. Further, it may occur that air is entrapped between the insulation layer and the field restraining layer which affects the electrical behavior.

In the mentioned known sleeve arrangement, the individual layers are manufactured by extrusion. From US patent 4,383,131 it also has become known to manufacture a multilayer sleeve by coextrusion. The cylindrical sleeve of this kind includes a field-controlling inner layer, a middle insulating layer and an electrically conducting outer layer. The electrically conducting layer consists of a heat shrinkable material so that the sleeve may be shrunkonto the connection area after the connection has been made. The area between the field restraining layers of cables to be interconnected does not have a uniform cylindrical configuration, in particular, different radii occur in the range of the connector element. It is therefore required to wrap a field controlling tape or the like around the connection area prior to the application of the sleeve. This measure is to avoid air entrainments which may cause undesired electrical discharges and breakdowns. The wrapping with the field controlling material is also relatively time consuming and is critical under electrical aspects. From US patent 3,816,640, it has become known to apply a plurality of radially shrinkable separate sleeves to a cable connection. The sleeves consist of field-controlling dielectric material and have a length such that a conical transition from the cable toward the cable connection is achieved effecting a geometrical capacitive field control. A conductive layer is placed directly around the connection area which makes the wrapping with a dielectric tape unnecessary. The successive application of individual layers, however, is time consuming. Further, the geometrical capacitive field control requires a lot of experience and professional handling to avoid air entrainments which may lead to electrical discharges and breakdowns. The individual sleeves or layers consist of elastomeric material and are individually retained in a radially expanded state by means of a supporting coil. If the coil is removed, the sleeve shrinks radially and engages the connection area or the layer therebelow.

From German patent specification 3012971, a compound sleeve has become known which is made by extrusion and comprises an inner conductive or semi-conductive layer, a middle insulating layer and an outer conductive layer which also has heat shrinking properties. The extruded cylindrical sleeve is machined by a chip-forming process such that the inner diameter is conically enlarged toward the free ends in order to achieve geometrical capacitive field control. The machining of the known sleeve after forming the sleeve by extrusion is relatively expensive. The known sleeve also requires a preparing treatment in the connection area before it is radially shrunk.

Cold shrinking sleeves held by a coil in a pre-stretched condition and heat shrinking sleeves have the advantage that they attain an inner diameter in the pre-stretched state which is larger than the outer diameter of the cable sheath. Therefore, such sleeves can be parked in a relatively favorable position on a cable end prior to establishing the conductor connection. Also integrally formed sleeves are known which are made by injection molding of relatively stiff elastomeric material. The known sleeve has a relatively small inner diameter at its ends. In order to attain a parking position on one end portion of a cable, it is necessary to remove the insulation throughout a greater length. The sleeve is pushed onto the connection area after the conductor connection has been established with the portions having a smaller diameter engaging the field restraining layer of the cable ends under pressure. The area of engagement must be relatively small and the pressure by which the field restraining layer is engaged must not be high, otherwise the displacement of the sleeve onto the connection area cannot be carried out by manual operation. The use of such sleeves, however, has the advantage that the wrapping of dielectric tapes on the connection area prior to the placing of the sleeve can be omitted. A conductive electrode is positioned inside the sleeve which extends beyond both ends of the connector element and clampingly engages the insulation layer. Such electrode effects a uniform distribution of the field so that hollow spaces within the sleeve are not critical.

From US patent 3,717,717, an integral sleeve has become known which includes a heat shrinkable insulation layer, the outer side thereof is provided with a semi-conductive layer while the inner side thereof is laminated with a conductive layer which contiguously engages the electrical connection after shrinking of the sleeve. In order to achieve a geometric-capacitive field control, the extremities of the sleeve are conically shaped.

US patent 4,390,745 discloses a cylindrical sleeve composed of two separate sleeve portions of heat shrinkable material. The first or inner sleeve portion has an insulating layer, a dielectric portion at least at one extremity of the sleeve, and a conductive portion spaced from the dielectric portion being provided at the inner side of the insulating layer. The second or outer sleeve portion includes an insulating layer, a semi-conductive layer being provided at the outer side thereof. Upon assembly first the inner sleeve portion is heat-shrunk for example onto a cable connection and thereafter the outer sleeve portion is heat-shrunk onto the inner sleeve portion.

DE-A-3,001,158 discloses a sleeve for a high voltage cable comprising an inner layer of semiconductive material located between the ends of the sleeve, a radially outer layer of semiconductive material and a middle layer between the inner and outer layers. The semiconducting inner layer connects the semiconducting screens of the cable.

The present invention provides a sleeve for enclosing a connection or a termination of an electrical cable, which can be simply manufactured and installed without great expense of time, which further provides a compact cable connection or a compact termination and which finally secures a sufficient tightness so that it can operate over a long time with high reliability.

### Summary of the Invention

According to a first aspect of the present invention there is provided a radially shrinkable cylindrical sleeve in accordance with claim 1.

According to a second aspect of the present invention there is provided an elongate cylindrical sleeve in accordance with claim 11

The sleeve disclosed is a single piece part and substantially uniform cylindrically. The middle and the outer layer are conventionally structured and are of material which has a sufficient elasticity to be radially expanded and relaxed to be placed onto a cable connection or a cable termination.

In one embodiment the inner layer includes at least one first end portion at one end of the sleeve consisting of permanent flexible dielectric material. It engages the field or stress restraining layer of the cable and has stress controlling properties to influence the field distribution at the end of the field restraining cable enclosure. A further portion of the inner layer of electrically conducting or semi-conducting material is located at a distance from the first portion which acts as an electrode and in case of a cable connection surrounds a connector element and engages the conductor insulation at both ends of the connector element.

According to a further embodiment of the invention, it is therefore advantageous when the portions of the inner layer are embedded in the material of the insulation layer, that the inner diameter of the end portion or portions and/or the second portion is substantially the same as of the middle or insulation layer. In this case, the sleeve accordinq to the invention cannot be molded by extrusion, rather, according to an embodiment of the invention, can be formed by injection molding by forming the layers successively. A method for injection molding of such sleeves has become known from the German patent specification 36 33 884. A series of cores having a shape corresponding to the cavity of the article is cyclically advanced through a series of mold cavities, and is provided, by injection molding, with a free core being present at the beginning of the series. In each of the subsequent mold cavities a partial article is formed which is a subsequent layer of the article, and a finished article is removable at the end of the series, and is separated from the core. By this, the sleeve according to the invention can be made by mass production without requiring a subsequent machining or the like.

The integral sleeve according to the invention is radially shrinkable; for this two different techniques can be offered which both are known in the art. According to one method, an outer layer is comprised of heat shrinkable material which in a radially stretched state retains the middle and the inner layer radially expanded. In case the individual layers of the sleeve according to the invention are formed by injection molding, they have to be bonded together. Therefore, the radially expanded outer layer may hold the middle and the inner layer in a stretched condition after a corresponding treatment. If for example the sleeve is shrunk onto a cable connection, the outer layer contracts radially, while the middle and the insulation layer follow this movement if they are made of elastomeric material. Compound sleeves which are structured in this manner and are adapted to be heat shrunk to elongated articles are for example known from US patent 4,207,364.

According to an alternative method, the sleeve according to the invention can be retained in the radially stretched state by an internal support device, preferably a support core which is removed if a shrinking of the sleeve has to take place. This process is known as cold shrinking. Coils which are designed to retain a sleeve of elastomeric material in a radially stretched state are for example known from US patent 3,515,798 or the German patent specification 37 15 915. If such coils are used for cable sleeves which are composed of a multi layer, each layer is radially supported by a separate supporting coil. The material of the individual layers has to be sufficiently elastic or soft-elastic so that they may withstand the occurring forces. According to a further embodiment of the invention, the middle insulating layer consists of liquid-silicon-rubber which has significant soft-resilient properties. It also turned out that due to the uniform cylindrical shape and the design of the inner layer, the overall wall thickness of the sleeve can be relatively small which meets the use of a mechanical support means. The one-piece structure of the sleeve according to the invention necessitates only one insulation layer in contrast to the known sleeve of US patent 4,390,745. Therefore, the insulation layer can be provided with a small thickness since the risk of air entrainments or the like can be excluded.

The sleeve according to the invention has numerous positive effects. As already mentioned, it can be simply made by mass production. It can be extremely easily installed. The application of field or stress controlling tapes to the area of the connector element is unnecessary since the conducting or semi-conducting material of the second portion of the inner layer effects an equalizing of the field distribution. The dimensions of the sleeve according to the invention in its shrunk state enable a compact cable connection.

The sleeve according to the invention is also extremely reliable and should retain its effectiveness over a sufficiently long period of time to afford nearly continuous service. The geometry of the sleeve according to the invention enables an effective stress control of the electrical field so that the danger of breakdowns and electrical discharges is very small. The sleeve according to the invention engages the cable and the connection area, respectively, over its total length whereby a sufficient sealing is achieved avoiding a penetration of water and humidity. In particular, since a cold shrinking sleeve is used, the cable connection can be operated immediately after installation of the splice. The assembly of the sleeve according to the invention is possible preferably in the temperature range from ± 0°C to + 40° C. It can be stored for at least 6 months at a maximum temperature of + 40°C. The possible lifetime of the sleeve according to the invention is at least 20 years in which time period a sufficient sealing against the penetration of water and humidity is achieved. The necessary electrical properties according to the standard provisions can be met in the normally prevailing temperature range of + 5°C up to 90°C.

The invention will be subsequently described in connection with the drawings.

### Brief Description of the Drawings

Fig. 1 is a perspective view of a sleeve according to the invention partially cut out.
Fig. 2 is the perspective view of the sleeve of Fig. 1 in a radially stretched state retained by a supporting core, and illustrated as partially cut out.
Fig. 3 is a perspective view of the sleeve of Fig. 1 after being shrunk onto a cable connection.

### Description of the Preferred Embodiment

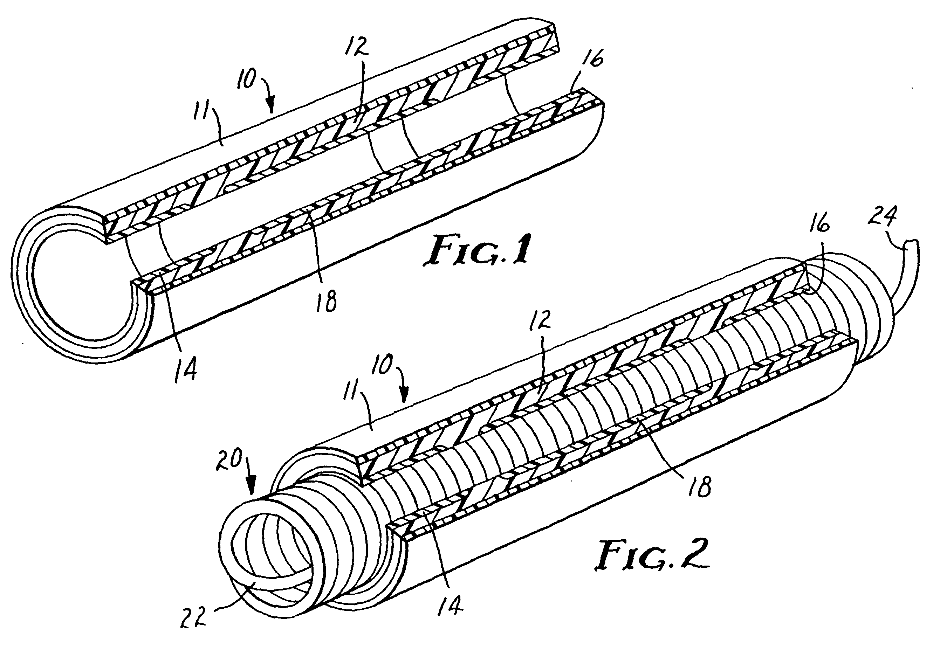

The sleeve 10 shown in Figs. 1 and 2 is annularly cylindrical and includes an outer layer 11, a middle layer 12 and an inner layer which is composed of two end portions 14, 16 and a median portion 18 which is spaced from the end portions. The outer layer 11 has a uniform wall thickness and consists of semi-conductive material, e.g. semi-ccnductive Vinyl-Methyl-Silicon. The middle layer consists of an insulative cured liquid-silicone rubber. The end portions 14, 16 consist cf stress controlling dielectric material, e.g. Vinyl-Methyl-Silicon vulcanized at high temperature. The dissipation factor is below 0.1. The dielectric constant is between 15 and 25, preferably about 15. The stress controlling portions consist preferably of a material which is known from the German patent specification 30 08 264. It is a permanent-flexible dielectric material having an electrical volume resistivity at room temperature of at least 10⁶ Ohm.cm. The base material is silicon rubber
with a content of a finely divided conductive material to increase the relative dielectric constant. The conductive material comprises strongly structurized dustfine particles of a weakly conductive, electrically polarizable material in a mass content of up to about 350g per kg base material. Preferably, the conductive material is carbon black.

The median portion 18 acts as an electrode and consists of semi-conductive Vinyl-Methyl-Silicon-Mixture vulcanized at high temperature.

In the sleeve 10 according to Fig. 1, the portions 14, 16 and 18 are embedded in the insulation material; but the outer and the inner surface of the sleeve 10 have a constant diameter. The sleeve is formed by injection molding wherein preferably first the portions 14, 16 and 18 are formed and thereafter the layers 12 and 11. When molding the sleeve, preferably a method is applied which is described in the German patent specification 36 33 884. The layerwise injection molding takes place by means of a plurality of cores having a shape corresponding to the cavity of the article, the cores being cyclically advanced through a series of mold cavities and is provided, by injection molding, with a free core being present at the beginning of the series. In each of the subsequent mold cavities a partial article is formed which is a subsequent layer of the article, and a finished article is removable at the end of the series, and is separated from the core.

All layers of sleeve 10 shown are of elastic material so that it can be radially stretched to a sufficient amount. The portions 14, 16 and 18 have preferably the same wall thickness. At the beginning, the inner diameter is for example 17.7 mm. The sleeve 10 is radially stretched for example to an inner diameter of 55 mm by a suitable device (not shown). In this state, a support coil 20 is introduced (Fig. 2) for example known from the German patent specification 37 15 915. Adjacent convolutions of the support coil 20 are interconnected in circumferential areas so that the coil may withstand the inherent radial forces of sleeve 10. In the embodiment shown in Fig. 2, the lefthand portion of the coil 10 is led back through the coil and can be manually gripped at 24. By withdrawing the coil 20 from the sleeve, the sleeve 10 may radially shrink.

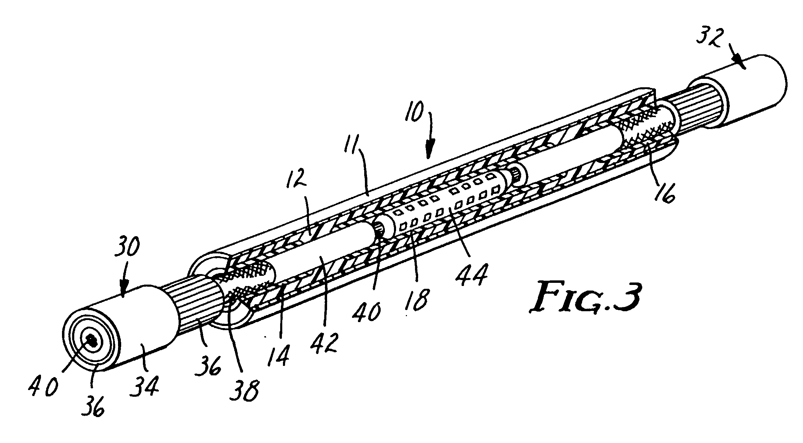

In Fig. 3, the sleeve 10 is shrunk onto a cable connection. In Fig. 3, two ends 30, 32 of one-core cables are illustrated having a typical structure. This structure is to be briefly explained with the aid of cable end 30. A cable sheath 34 of suitable insulation material surrounds an earth conductor or shield 36 of copper wire which in turn surrounds an electrically semi-conductive screen 38. It serves as known for the restraint of the electrical field of conductor 40 which is surrounded by an insulation 42. The exposed conductors of the cable ends 30, 32 are interconnected by means of a connector element 44. The connector element 44 is crimped onto the conductors 40. To this purpose it is necessary to remove the insulation 42. The field restraining screen 38 is removed at a larger distance from the conductor end. The earth conductor 36 and the cable sheath 34 are removed at a still larger distance from the end as can be seen.

The sleeve 10 is shrunk such that the portion 18 extends along the connector element 44 and engages the insulation 42. The portions 14, 16 of dielectric material are in engagement with the field restraining semi-conductive screen 38. It can be seen that the sleeve 10 when shrunk has a constant outer diameter and also approximately a constant inner diameter with some small deformations occurring at the transitions between the field restraining layer and the insulation 42 and between the insulation 42 and the conductor 40 or the connector element 44, respectively. The necessary field or stress controlling or field distributing effect of sleeve 10 thus does not take place through a geometric capacitive configuration, rather, exclusively by the stress controlling cylindrical portions 14, 16. The electrode 18 effects a uniform field distribution by defining a Faraday cage. A wrapping with a dielectric tape or the like prior to the shrinking of sleeve 10 is not necessary. The interstices between the insulation 42 and the connector element 44 or between the connector element 44 and the electrode 18 are of no importance and do not cause electrical discharges or breakdowns.

It can be seen further that the inner side of sleeve 10 continuously engages the connection area over its total length and, thus, has a sealing effect. A penetration of water or humidity, respectively, is avoided.

Before the shrinking step takes place and before making the electrical connection by means of the connector element 44, sleeve 10 is parked in a position on one cable end 30 or 32, respectively. After this, sleeve 10 is displaced and positioned in the connection area in its still radially stretched state. Subsequently, the support coil 20 is removed as described in connection with Fig. 2 so that sleeve 10 may be shrunk onto the cable connection. It is understood that after the shrinking of sleeve 10, respective end-sleeves (not shown) can be shrunk onto the transition area of cable sheath 34 and sleeve 10 which end sleeves may also consist of field or stress controlling dielectric material. Such conical sleeves are generally known.

It is understood that the outer layer 11 is electrically connected to the shield 36 e.g. by means of a metallic net sleeve.

## Claims

1. A radially shrinkable cylindrical sleeve for enclosing a connection or terminal, respectively, of an electrical cable including a conductor (40), an insulation (42) surrounding said conductor, and a field restraining shielding layer (38) surrounding said insulation (42), said sleeve comprising a first inner layer adapted to engage said field restraining layer (38), a middle layer of an electrical insulative material, and an outer layer of an electrically semi-conductive material to form an integral sleeve (10), said sleeve being elastic and permanently flexible, and elastically stretched and placed in a radially expanded state on a removable support means (20), **characterized in that** said inner layer (18) includes a cylindrical portion of conductive or semi-conductive material located between the ends of said sleeve and adapted to engage said conductor (40) or a sleeve-shaped connector element (44) and the adjacent insulation (42) and at least one cylindrical end portion (14, 16) made of dielectric material and engaging said field restraining layer (38) of said cable to provide a field control, said support means is a coil (20), and said layers are cylindrical portions (14, 16, 12, 11) and are formed of silicone such that said sleeve will recover toward its relaxed position.

2. The sleeve according to claim 1, **characterised in that** said sleeve has opposite ends and said inner layer includes a cylindrical portion (18) of conductive or semi-conductive material located between the ends of the sleeve (10), and the inner diameter of said sleeve is uniform between said ends and the inner surface is defined by said end portion and said sleeve-shaped portion (18) of said inner layer and said middle layer (12) exclusively.

3. The sleeve according to claim 1 or 2, **characterised in that** the outer layer is of semi-conductive silicone rubber.

4. The sleeve according to claim 1 or 2, **characterised in that** said middle and/or outer layer is/are made of liquid silicone rubber.

5. The sleeve according to claim 2, **characterised in that** the dissipating factor of said end portion is below 10%.

6. The sleeve according to claim 1, **characterised in that** said inner layer includes a pair of cylindrical end portions (14, 16) formed of a dielectric Vinyl-Methyl-Silicone, a cylindrical central portion (18) of semi-conductive Vinyl-Methyl-Silicone material located between and spaced from said end portions and that said central portion (18) is adapted to engage said conductor (40) or a sleeve-shaped connector element (44) and the adjacent cable insulation (42), that said middle layer (12) is an electrically insulating silicone material bonded to said inner layer, and that said outer layer (11) comprises electrically semi-conductive Vinyl-Methyl-Silicone material bonded to said middle layer to form an integral sleeve (10), said layers consist of an elastic and permanently flexible material adapted to be retained in a radially expanded state on a coiled support means (20) for supporting said layers in the expanded state, said coil means being positioned within said inner layer, said support means comprising a coil (20) formed to be removed by unwinding the coil, one helical convolution at a time, to withdraw the coil from the sleeve allowing the sleeve to relax onto a said connection, and said semi-conductive material includes electrically polarizable material to provide the desired conductance.

7. The sleeve according to claim 6, **characterised in that** said end portions (14, 16) and said central portion (18) are embedded in the material of the middle layer (12).

8. The sleeve according to claim 7, **characterised in that** the inner diameter of said end portion (14) is equal to that of said middle layer (18).

9. The sleeve according to claim 6, **characterised in that** said layers (14, 16, 18, 12, 11) are formed by successive injection molding.

10. The sleeve according to claim 6 **characterised in that** said conductive or semi-conductive cylindrical portion (18) is Vinyl-Methyl-Silicone vulcanised at high temperature.

11. An elongate cylindrical sleeve (10) for a connection or termination of an insulated cable having a screen (38), comprising a peripherally outer layer (11) of semi-conductive material, a peripherally inner layer (14, 16, 18) having a first portion (14, 16) of stress controlling dielectrical material adjacent to at least one end of the sleeve in the elongate direction for engaging the screen (38) of the cable and a second portion (18) of semi-conductive or conductive material remote from the end for engaging the conductor (40) of said cable or a sleeve-shaped connector element (44) and the adjacent insulation (42), and the sleeve further comprising a layer of electrically insulative material (12) between the inner and outer layers, the layers of the sleeve being bonded together by successive injection molding whereby the sleeve is integral, and the materials of each layer consisting of soft elastic and permanent flexible material, whereby the sleeve may be elastically and radially stretched from a relaxed state to a stretched state to fit onto a removable support means (20) and the sleeve subsequently recovers towards the relaxed state.

12. The sleeve of claim 11 wherein the layer of electrically insulative material between the inner and outer layers and/or the outer layer (11) is/are made of liquid silicone rubber.

13. The sleeve of claim 11 or 12 wherein the first portion (14, 16) of stress controlling dielectric material and/or the second portion (18) is of Vinyl-Methyl-Silicone vulcanized at high temperature.

14. The sleeve of any of claims 11-13 wherein the first portion (14, 16) of stress controlling dielectric material includes means for increasing the dielectric constant, particularly carbon black.

15. The sleeve of any of claims 11-14 wherein the dielectric constant of the first portion is between 15 and 25 preferably about 15.

## Patentansprüche

1. Radial schrumpfbare zylindrische Muffe zum Einschließen einer Verbindung bzw. eines Anschlusses eines elektrischen Kabels mit einem Leiter (40), einer den Leiter umgebenden Isolierung (42) und einer die Isolierung (42) umgebenden Feldabschirmschicht (38), wobei die Muffe eine erste innere Schicht, die mit der Feldabschirmschicht (38) in Eingriff treten kann, eine mittlere Schicht aus einem elektrisch isolierenden Material und eine äußere Schicht aus einem elektrisch halbleitenden Material besteht, so daß eine einstückige Muffe (10) entsteht, wobei die Muffe elastisch und permanent flexibel ist und elastisch gestreckt und im radial aufgeweiteten Zustand auf eine herausnehmbare Halterung (20) aufgebracht ist, **dadurch gekennzeichnet, daß** die innere Schicht (18) einen zylindrischen Abschnitt aus einem leitenden oder halbleitenden Material umfaßt, der zwischen den Enden der Muffe angeordnet ist und mit dem Leiter (40) oder einem muffenartigen Verbindungselement (44) und der angrenzenden Isolierung (42) in Eingriff treten kann, und mindestens ein zylindrischer Endabschnitt (14, 16) aus dielektrischem Material besteht und mit der Feldabschirmschicht (38) in Eingriff ist, um eine Feldsteuerung zu bewirken, daß die Halterung eine Spule (20) ist, und daß die Schichten zylindrische Abschnitte (14, 16, 12, 11) sind und aus Silicon bestehen, so daß die Muffe wieder in ihre entspannte Position zurückkehrt.

2. Muffe nach Anspruch 1, **dadurch gekennzeichnet, daß** die Muffe entgegengesetzte Enden besitzt und die innere Schicht einen zylindrischen Abschnitt (18) aus einem leitenden oder halbleitenden Material umfaßt, der zwischen den Enden der Muffe (10) angeordnet ist, und daß der Innendurchmesser der Muffe zwischen den Enden einheitlich ist und die Innenseite ausschließlich durch den Endabschnitt und den muffenartigen Abschnitt (18) der inneren Schicht und der mittleren Schicht (12) begrenzt ist.

3. Muffe nach Anspruch 1 oder 2, **dadurch gekennzeichnet, daß** die äußere Schicht aus halbleitendem Silicongummi besteht.

4. Muffe nach Anspruch 1 oder 2, **dadurch gekennzeichnet, daß** die mittlere und/oder die äußere Schicht aus flüssigem Silicongummi hergestellt ist bzw. sind.

5. Muffe nach Anspruch 2, **dadurch gekennzeichnet, daß** der Verlustfaktor des Endabschnitts unter 10% liegt.

6. Muffe nach Anspruch 1, **dadurch gekennzeichnet, daß** die innere Schicht ein Paar zylindrischer Endabschnitte (14, 16) aus einem dielektrischen Vinyl-Methyl-Silicon und einen zylindrischen mittleren Abschnitt (18) aus halbleitendem Vinyl-Methyl-Silicon umlaßt, der zwischen den Endabschnitten und im Abstand von diesen angeordnet ist, und daß der mittlere Abschnitt (18) mit dem Leiter (40) oder einem muffenartigen Verbindungselement (44) und der angrenzenden Kabelisolierung (42) in Eingriff treten kann, daß die mittlere Schicht (12) aus einem elektrisch isolierenden Silicon besteht, das mit der inneren Schicht verklebt ist, und daß die äußere Schicht (11) ein elektrisch halbleilendes Vinyl-Methyl-Silicon umfaßt, das mit der mittleren Schicht verklebt ist, um eine einstückige Muffe (10) zu bilden, wobei die Schichten aus einem elastischen und permanent flexiblen Material bestehen, das in einem radial aufgeweiteten Zustand auf einer spulenartigen Halterung (20) gehalten werden kann, um die Schichten im aufgeweiteten Zustand zu halten, wobei die Spuleneinrichtung in der inneren Schicht angeordnet ist und die Halterung eine Spule (20) umfaßt, die so ausgebildet ist, daß sie entfernt werden kann, indem die Spule Lage für Lage abgewickelt wird, um die Spule aus der Muffe herauszuziehen, so daß die Muffe sich auf der Verbindung entspannen kann, und daß das halbleitende Material ein elektrisch polarisierbares Material umfaßt, um den gewünschten Leitwert herzustellen.

7. Muffe nach Anspruch 6, **dadurch gekennzeichnet, daß** die Endabschnitte (14, 16) und der mittlere Abschnitt (18) in das Material der mittleren Schicht (12) eingebettet sind.

8. Muffe nach Anspruch 7, **dadurch gekennzeichnet, daß** der Innendurchmesser des Endabschnitts (14) gleich dem der mittleren Schicht (18) ist.

9. Muffe nach Anspruch 6, **dadurch gekennzeichnet, daß** die Schichten (14, 16, 18, 12, 11) nacheinander durch Spritzgießen hergestellt werden

10. Muffe nach Anspruch 6, **dadurch gekennzeichnet, daß** der leitende oder halbleitende zylindrische Abschnitt (18) bei hoher Temperatur vulkanisiertes Vinyl-Methyl-Silicon ist.

11. Langgestreckte zylindrische Muffe (10) zur Verbindung oder zum Abschluß eines isolierten Kabels mit einem Schirmgitter (38), umfassend eine äußere Umfangsschicht (11) aus halbleitendem Material, eine innere Umfangsschicht (14, 16, 18) mit einem ersten Abschnitt (14, 16) aus einem die Belastung kontrollierenden dielektrischen Material im Bereich von wenigstens einem Ende der Muffe in Längsrichtung, um mit dem Schirmgitter (38) des Kabels in Eingriff zu treten, und mit einem zweiten Abschnitt (18) aus halbleitendem oder leitendem Material, der von dem Ende entfernt ist, um mit dem Leiter (40) des Kabels oder einem muffenartigen Verbindungselement (44) und der angrenzenden Isolierung (42) in Eingriff zu treten, wobei die Muffe des weiteren eine Schicht aus einem elektrisch isolierenden Material (12) zwischen der inneren und der äußeren Schicht umfaßt, wobei die Schichten der Muffe miteinander verklebt sind, indem sie nacheinander durch Spritzgießen hergestellt wurden, so daß die Muffe einstückig ausgebildet ist, und wobei jede Schicht aus einem weichen elastischen und permanent flexiblen Material besteht, so daß die Muffe elastisch und radial von einem entspannten in einen gestreckten Zustand gestreckt werden kann, um auf eine herausnehmbare Halterung (20) aufgepaßt zu werden, und anschließend wieder in den entspannten Zustand zurückkehrt.

12. Muffe nach Anspruch 11, bei der die Schicht aus elektrisch isolierendem Material zwischen der inneren und der äußeren Schicht und/oder die äußere Schicht(11) aus flüssigem Silicongummi hergestellt ist bzw. sind.

13. Muffe nach Anspruch 11 oder 12, bei der der erste Abschnitt (14, 16) aus die Belastung kontrollierendem dielektrischen Material und/oder der zweite Abschnitt (18) aus bei hoher Temperatur vulkanisiertem Vinyl-Methyl-Silicon besteht bzw. bestehen.

14. Muffe nach einem der Ansprüche 1 bis 13, bei der der erste Abschnitt (14, 16) aus die Belastung kon-trollierendem dielektrischem Material ein Mittel zur Erhöhung der Dielektrizitätskonstante, und zwar insbesondere Ruß enthält.

15. Muffe nach einem der Ansprüche 11 bis 14, bei der die Dielektrizitätskonstante des ersten Abschnitts zwischen 15 und 25 liegt und vorzugsweise etwa 15 beträgt.

## Revendications

1. Manchon cylindrique radialement rétractable destiné à enfermer soit une jonction, soit une terminaison d'un câble électrique comportant un conducteur (40), une isolation (42), qui entoure le conducteur, ci une couche de blindage de restriction de champ (38) qui entoure l'isolation (42), le manchon comportant une première couche intérieure agencée de façon à venir au contact de la couche de restriction de champ (38), une couche intermédiaire en une matière électriquement isolante et une couche extérieure en une matière électriquement semi-conductrice, de façon à former un manchon (10) d'une seule pièce, le manchon étant élastique et souple d'une manière permanente et étant dilaté élastiquement et placé dans un état radialement dilaté sur un moyen de support (20) agencé de façon à pouvoir être retiré, **caractérisé en ce que** la couche intérieure (18) comporte une partie cylindrique de matière conductrice ou semi-conductrice située entre les extrémités du manchon et agencée de façon à venir au contact du conducteur (40) ou d'un élément connecteur (44) en forme de manchon, et de l'isolation (42) adjacente, et au moins une partie cylindrique terminale (14, 16) est réalisé en matière diélectrique et est en contact de la couche de restriction de champ (38) pour effectuer une commande de champ, **en ce que** les moyens de support consistent en un enroulement hélicoïdal (20) et **en ce que** les couches sont des parties cylindriques (14, 16, 12, 11) et sont réalisées en silicone, de sorte que le manchon retourne à sa position de relaxation.

2. Manchon selon la revendication 1, **caractérisé en ce que** le manchon comporte des extrémités opposées et la couche intérieure comporte une partie cylindrique (18) en matière conductrice ou semi-conductrice située entre les extrémités du manchon (10), **en ce que** le diamètre intérieur du manchon est uniforme entre lesdites extrémités et **en ce que** la surface intérieure est définie exclusivement par ladite partie d'extrémité et la partie (18) en forme de manchon de la couche intérieure et par la couche intermédiaire (12).

3. Manchon selon la revendication 1 ou 2, **caractérisé en ce que** la couche extérieure est en caoutchouc de silicone semi-conducteur.

4. Manchon selon la revendication 1 ou 2, **caractérisé en ce que** la couche intermédiaire et/ou la couche extérieure est/sont réalisées en caoutchouc au silicone liquide.

5. Manchon selon la revendication 2, **caractérisé en ce que** le facteur de dissipation de ladite partie d'extrémité est inférieur à 10%.

6. Manchon selon la revendication 1, **caractérisé en ce que** la couche intérieure comporte deux parties cylindriques d'extrémité (14, 16) formées d'un vinyl-méthyl-silicone diélectrique, une partie cylindrique centrale (18) en matière de vinyl-méthyl-silicone semi-conducteur située entre lesdites parties d'extrémité et espacée de ces dernières, **en ce que** la partie centrale (18) est agencée de façon à venir au contact du conducteur (40), ou d'un élément connecteur (44) en forme de manchon, et de l'isolation de câble (42) adjacente, **en ce que** la couche intermédiaire (12) est une matière de silicone électriquement isolante collée à la couche intérieure, **en ce que** la couche extérieure (11) comprend une matière de vinyl-méthyl-silicone électriquement semi-conducteur collée à la couche intermédiaire de façon à former un manchon (10) d'une seule pièce, **en ce que** les couches sont constituées d'une matière élastique et à souplesse permanente apte à être maintenue dans un état radialement dilaté sur un moyen de support (20), enroulé d'une manière hélicoïdale (20), qui sert à supporter les couches dans l'état dilaté, les moyens d'enroulement hélicoïdal étant disposés à l'intérieur de la couche intérieure et les moyens de support comprenant un enroulement hélicoïdal (20) formé de façon à être retiré par déroulement de l'enroulement hélicoïdal spire après spire de façon à retirer du manchon l'enroulement hélicoïdal, ce qui permet une relaxation du manchon par-dessus ladite jonction, et **en ce que** la matière semi-conductrice comprend une matière électriquement polarisable de manière à assurer la conductance voulue.

7. Manchon selon la revendication 6, **caractérisé en ce que** les parties d'extrémité (14, 16) et la partie centrale (18) sont emboîtées dans la matière de la couche intermédiaire (12).

8. Manchon selon la revendication 7, **caractérisé en ce que** le diamètre intérieur de la partie d'extrémité (14) est égal à celui de la couche intermédiaire (18).

9. Manchon selon la revendication 6, **caractérisé en ce que** les couches (14, 16, 18, 12, 11) sont formées par moulage par injection de type successif.

10. Manchon selon la revendication 6, **caractérisé en ce que** la partie cylindrique conductrice ou semi-conductrice (18) est un vinyl-méthyl-silicone vulcanisé à température élevée.

11. Manchon cylindrique allongé (10) destiné à une jonction ou à une terminaison d'un câble isolé comportant un écran (38), comprenant une couche périphériquement extérieure (11) en matière semi-conductricc, une couche périphériquement intérieure (14, 16, 18) comportant une première partie (14, 16) en matière diélectrique de contrôle de contrainte, adjacente à au moins une extrémité du manchon suivant la direction d'allongement et destinée à venir au contact de l'écran (38) du câble, et une seconde partie (18) en matière semi-conductrice ou conductrice, éloignée des extrémités et destinée à venir au contact du conducteur (40) du câble, ou d'un élément connecteur (44) en forme de manchon, et de l'isolation (42) adjacente, tandis que le manchon comprend en outre une couche de matière électriquement isolante (12) entre les couches intérieure et extérieure, les couches du manchon étant collées entre elles par moulage par injection de type successif, de sorte que le manchon est d'une seule pièce, les matières de chaque couche étant constituées d'une matière souple-élastique et à souplesse permanente, de sorte que la manchon peut être dilaté élastiquement et radialement d'un état de relaxation à un état dilaté de façon à s'adapter par-dessus un moyen de support (20) agencé de manière à pouvoir être retiré, le manchon revenant ensuite vers l'état de relaxation.

12. Manchon selon la revendication 11, dans lequel la couche de matière électriquement isolante située entre les couches intérieure et extérieure et/ou la couche extérieure (11) est/sont formées d'un caoutchouc au silicone liquide.

13. Manchon selon la revendication 11 ou 12, dans lequel la première partie (14, 16) en matière diélectrique de contrôle de contrainte et/ou la seconde partie (18) est en un vinyl-méthyl-silicone vulcanisé à température élevée.

14. Manchon selon l'une quelconque des revendications 11-13, dans lequel la première partie (14, 16) en matière diélectrique de contrôle de contrainte comporte un moyen permettant d'accroître la constante diélectrique, en particulier du noir de carbone.

15. Manchon selon l'une quelconque des revendications 11-14, dans lequel la constante diélectrique de la première partie est comprise entre 15 et 25 et est de préférence égale à 15 environ.
